# EUROPEAN PATENT APPLICATION

(11) **EP 3 945 129 A1**
(43) Date of publication of application: **02.02.2022**
(21) Application number: 20187901.2
(22) Date of filing: 27.07.2020
(51) Int. Cl.: C12G 3/08, C12H 3/00, C12H 3/02, G01F 1/76, G01F 1/86, G01F 1/88, C12C 11/11, C12C 12/04

(54) **INOCULATION STATION AND METHOD FOR MONITORING AN INOCULATION STATION FOR A PLANT FOR REDUCING AN ALCOHOL CONTENT IN A BEVERAGE**

(71) Applicant: Api Schmidt-Bretten Gmbh&co. Kg, 75015 Bretten (DE)
(72) Inventor: Teuber, Wilfried, 75033 Gondelsheim (DE)
(74) Representative: Mammel und Maser

(57) **Abstract**

The invention relates to an inoculation station and a method for monitoring an inoculation station for a plant (10) for reducing an alcohol content in a beverage, comprising a container (61) in which at least one fractional substance is provided, a line (57) leading from the container (61), which opens into an outlet line (16) through which a reduced-alcohol beverage can be supplied to a collecting container (21) or can be led out of the plant (10), having a flow meter (68) which is arranged in the outlet line (16) and is positioned upstream of the connection point (66) of the line (57), which opens into the outlet line (16), with a pump (63) arranged in the line (57), which feeds the fraction to the outlet line (16) in a metered manner, with a flow measuring device (64) arranged in the line (57) and connected downstream of the pump (63), by means of which the quantity of fractional substance fed to the outlet line (16) can be detected, wherein the container (61) is designed as a second measuring station (72) and the container (61) comprises a level detection device (73) by means of which the quantity of fractional substance withdrawn from the container (61) is detected. (See Figure 2)

## Description

The invention relates to an inoculation station for a plant for reducing an alcohol content in a beverage and a method for monitoring an inoculation station for a plant for reducing an alcohol content in a beverage.

From DE 38 43 516 A1 such a plant for reducing the alcohol content of a beverage is known. This plant comprises a degasser to which the alcoholic beverage is fed from a storage container. Furthermore, a rectifying device with a first and a second column is provided. A line branching off from the second column leads reduced-alcohol beverage to a separator, from which this reduced-alcohol beverage is discharged from the plant via an outlet line or fed to a collecting vessel. A condenser and a cooler are provided downstream of the rectifier. An alcohol concentrate can be discharged from the cooler.

Vapours are separated by the rectifying device. These vapours may include alcohol, perfumes and/or aromatic substances. The alcohol is separated from the vapours. The rectification device is integrated in a closed circuit so that the vapours discharged in the rectification device are condensed and the condensate will be returned to the rectifier.

The fractional substances separated from the vapours, such as fragrances and/or flavours, are added in doses to an inoculation station to enrich the taste of the reduced-alcohol beverage before it is discharged from the plant or transferred to a collection container. For the constant quality of the reduced-alcohol beverage, especially the sensory properties of the beverage, an exact dosage of at least one fractional substance is important.

The invention is based on the task of proposing an inoculation station for a plant for reducing an alcohol content in a beverage and a method for monitoring an inoculation station in such a plant by which the monitoring of the amount of at least one fractional substance added to the reduced-alcohol beverage is improved.

This task is solved by an inoculation station for a plant for reducing an alcohol content in a beverage, in which the container is designed as a second measuring station for providing at least one fractional substance for dosing into an alcohol-reduced beverage and the container comprises a level detection device by means of which the amount of fractional substance withdrawn from the container can be detected. This inoculation station makes it possible to detect not only the quantity of fractional substances discharged or added by a flow-measuring device provided between the container and the outlet line, but also additionally the quantity of fractional substances withdrawn from the container. This means that two measurements are provided for the quantity of fractional substances withdrawn or the quantity of fractional substances added. Furthermore, it is advantageously provided that the flow-measuring device and the second measuring station are designed differently, so that improved monitoring with regard to the quantity of fractional substances added is possible by means of two different measuring methods. This is particularly important in view of the fact that only a very small quantity of fractional substance is dosed in relation to the volume flow of reduced-alcohol beverage discharged in the outlet line.

Furthermore, it is preferably provided that the quantity of fractional substance fed to the outlet line, which is detected by the level detection device and the quantity of fractional substance detected by the flow-measuring device, can be detected by a control device. In this way, the detected values can be compared and evaluated. Thus, a corresponding dosing can already be controlled and readjusted during operation of the plant. By means of a redundant query of the quantity of fractional substance removed, an adjustment can be made to readjust the pump in the inoculation station so that the required quantity of fractional substance, i.e. the target quantity, can be adjusted accordingly.

It is advantageous that the level detection device in the container detects at least one pressure sensor, which is provided in the bottom of the container. This may allow a simple design of the second measuring station.

It is advantageous that the bottom of the container is designed as a flat bottom, which is oriented at a gradient to the cylindrical wall of the container and has at the lowest point an outlet opening for a line for feeding the at least one fractional substance from the container. This inclined bottom has the advantage that it enables the container with fractional substances to be emptied easily and completely. This is also of particular advantage when changing the fractional substance to be added to the reduced-alcohol beverage.

The level detection device is preferably calibrated to a zero point, which is located in a plane extending at the lower end of the cylindrical wall of the container, which is perpendicular to the cylindrical wall of the container. This means that a filling level can be easily determined on the basis of the fictitious zero point lying in the plane on the basis of the known base area of the container.

Preferably, a distance from the lowest point of the inclined bottom of the container to the plane lies within the size respectively the cross-section of the outlet opening connected to the container. The outlet opening is connected to the container so that the bottom of the container is in line with a lower rim of the outlet opening. The plane can be directed to the upper rim of the outlet opening. Preferably, the plane lies within a middle axis of the outlet opening. This embodiment has the advantage that the basic volume is very slim and further a complete emptying of the container can be achieved.

It is advantageous to determine the total volume in the tank by determining a basic volume, which is below zero down to the bottom with the inclined surface. This volume of liquid can be determined by measurement or calculation.

It is advantageous to be able to determine the volume or the quantity of the fractional substance in the container by means of the density of the fractional substance based on the pressure detected by the pressure sensor in the container. Since the base area of the container and the density of the fractional substance are known, the height and thus the filling level of the fractional substance in the container can be mathematically determined in a simple manner on the basis of the recorded pressure. The total volume of fractional substance in the container is made up of the base volume and the volume above zero. Starting from an actual value after filling the container, the quantity of fractional substance removed can be calculated as the fractional substance is discharged due to the change in pressure.

Furthermore, it is preferably provided that the feeding of the quantity of fractional substance can be controlled depending on the quantity of reduced-alcohol beverage detected by a flow-measuring device in the outlet line. This means that fluctuations in the quantity of alcohol-reduced beverage supplied can also be taken into account when dosing fractional substances.

Preferably, the container for receiving fractional substances is provided with a lid, whereby the locking of the lid can be monitored by a sensor. This represents a safety function in the cleaning process for the inoculation station.

The task underlying the invention is further solved by a method for monitoring an inoculation station for a plant for reducing an alcohol content in a beverage, in which a fractional substance is supplied to the alcohol-reduced beverage before it is discharged from the plant or transferred to a collecting container, wherein an inoculation station is used according to one of the above designs, by which the dosage of the fractional substance is monitored by a second measuring device. This monitoring can be carried out during the discharge of the fractional substance by passing the values detected by the level detection device and the flow-measuring device directly to a control device and comparing them with each other. Alternatively, it may also be provided that at the end of a product cycle for the production of the reduced-alcohol beverage a comparison is made between the data recorded by the level detection device and the flow-through device.

The invention as well as other advantageous forms of execution and further training of the same are described and explained in more detail below on the basis of the examples shown in the drawings. The features to be taken from the description and the drawings can be applied individually on their own or in any combination in accordance with the invention. It is shown:
Figure 1 a circuit diagram of a plant for reducing an alcohol content in a beverage with an inoculation station, and
Figure 2 a schematic enlarged view of an inoculation station as shown in Figure 1.

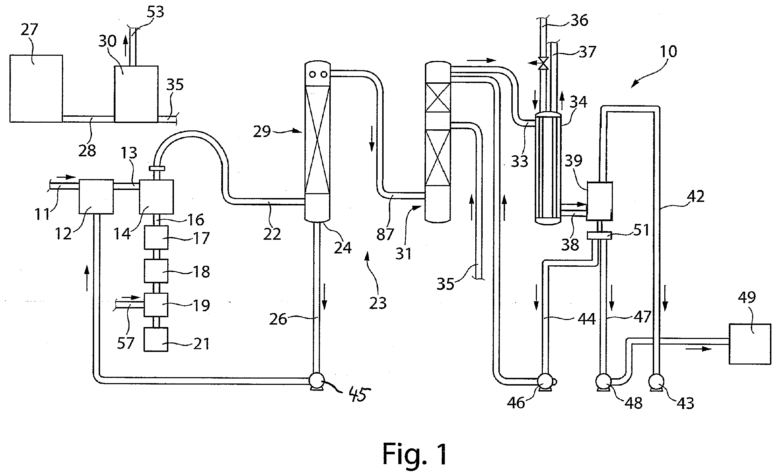

Figure 1 shows a schematic representation of a plant 10 for reducing the alcohol content of a beverage in accordance with the invention. Steam with a temperature of, for example, 110 °C is fed via a line 11 to a heat exchanger 12, the first circuit of which, in which this heat exchanger 12 is integrated, is not shown in detail. In the second circuit of heat exchanger 12 a line 13 is provided which leads to a separator 14. From the bottom of the separator 14 a pipe 16 emerges, which discharges the non-alcoholic beverage. The non-alcoholic beverage is preferably wine, sparkling wine or beer. In the outlet line 16 there is a heat exchanger 17, which cools down the temperature of the finished product and serves the heat economy. In addition, outlet line 16 contains a cooler 18, which cools the finished product down to 5 °C, for example. Finally, an inoculation station 19 follows, to which fractional substances such as CO2, fragrances and/or aromatic substances are fed, which are separated by fraction recovery from vapours of the alcoholic beverage. Through the injection station 19 the fractional substances are discharged in doses into the outlet line 16 and mixed into the alcoholic beverage. Downstream of the inoculation station 19 there is a collecting container 21 for receiving the finished product, i.e. the reduced-alcohol beverage.

The term "reduced-alcohol drink" also includes drinks in which the alcohol contained in the drink is reduced to such an extent that these drinks are described as dealcoholised or non-alcoholic and may in particular also contain 0.0% alcohol.

From the head of the separator 14, a first vapour line 22 leads the warm, non-separated vapours to a lower area of a rectifier 23. This rectifier 23 comprises a second column or lower column 29. From the bottom 24 of the rectifier 23, a line 26 leads to the heat exchanger 12. This closes this circuit in which the reduced-alcohol beverage is led.

In a storage container 27 the alcoholic beverage is stored, which is to be reduced in alcohol content. A line 28 leads from the storage tank 27 to a degasser 30, in which fractional substances, especially _{CO2}, are discharged via a line 53. These fractional substances can be fed to a fractional substance recovery device not shown. These fractions are added to the reduced-alcohol beverage in the inoculation station 19. From the degasser 30, line 35 leads to the second circuit of plant 10. The alcoholic beverage is fed via line 35 to the middle section of a first column 31 of the rectifier 23. A second vapour line 33 is provided at the upper end region of the rectifier 23 or at the head 32 of the rectifier 23, which discharges the vapours containing alcohol, flavour and/or aromas. The temperature in head 32 is, for example, 30 °C. This corresponds to approximately 44 mbar. The temperature in the rectifier 23 above the bottom 24 is, for example, 39 °C at a pressure of, for example, 70 mbar.

A third vapour line 87 is provided between the second column 29 and the first column 31. Instead of the two-part rectifier 23, a vessel may also be provided in which the first and second columns 29, 31 are arranged one above the other. The third vapour line 87 can be omitted.

In the steady state of rectifier 23, the second vapour line 33 discharges about 80 % of the alcohol, alcohol always being understood to be ethanol. The second vapour line 33 leads to a condenser 34, which is fed via a line 36 with coolant, in particular glycol. The coolant is discharged through one line 37. In the head of the condenser 34, the vapours fed to the condenser 34 may not yet condensed, which is why the vapours are fed to a separator 39 via a line 38. A vacuum line 42 leads into the head of the separator 39, which is connected to a pump 43 designed as a vacuum pump and which may in a first step also generates the vacuum present in the rectifier 23. From the bottom of the separator 39, there is a line 44 to a controller 51. A controller 51 determines the volume ratio in lines 44 and 47 of the separator 39. The line 47 drains the alcohol not required for return via a pump 48 to an alcohol tank 49, which carries at least liquefied alcohol in liquid form, for example with a concentration of not more than 82 %. The percentage may be between 20 % and 80 % depending on the dealcoholisation effort. The liquefied alcohol is fed via a pump 46 to the head 32 of the rectifier 23, in particular at a level no higher than the outlet of the second vapour line 33 above the first column 31.

When the plant is started up, line 47 initially remains closed until the alcohol content in lines 44, 33 and 38 has reached the desired level, for example 80%. A further increase in the alcohol content can be prevented by the controller 51 by discharge line 47, to the extent that it is ensured that it maintains the desired level on the alcohol percentage return path.

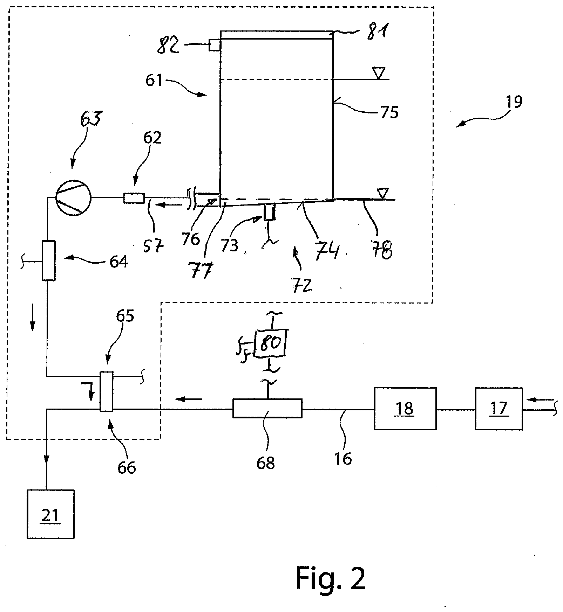

Figure 2 shows a schematic enlargement of the inoculation station 19 according to Figure 1 and the connection of the inoculation station 19 to the outlet line 16. This inoculation station 19 comprises a container 61 in which one or more fractional substances are stored. Via a line 57 connected to container 61, fractional substance is fed to outlet line 16. A reducer 62 is provided in line 57 to reduce the line cross section and to enable improved dosing via a pump 63. Downstream of the pump 63 is a flow measuring device 64, through which a volume flow is measured to detect the fractional substance passing through the line 57. The flow-measuring device 64 can transmit the measured values to a control device 80 of the plant 10. Downstream of the flow-measuring device 64, an extension piece may be provided by which the pipe cross-section is increased again. Via a valve 65 or a connecting piece the fractional substance is added to the outlet line 16. The outlet line 16 leads from the heat exchanger 17 via the cooler 18 to a reduced-alcohol beverage out of the plant 10 or into a collecting tank 21.

In front of a connection point 66, where the line 57 opens into the outlet line 16, a flow meter 68 is also provided in the outlet line 16, through which the volume flow of the reduced-alcohol beverage in the outlet line 16 is recorded. This flow meter 68 can transmit its detected measuring signals to the control device 80 of the plant 10.

The inoculation station 19 includes a first measuring station by means of the flow measuring device 64 to record the amount of fractional substance added to the reduced-alcohol beverage. Furthermore, a second measuring station 72 is provided in the inoculation station 19. This second measuring station 72 is formed by the container 61, in which a filling level detection device 73 is arranged. This filling level detection device 73 can transmit the detected measuring signals to the control device 80. This filling level detection device 73 is preferably designed as a pressure sensor. The container 61 is designed to form the second measuring station 72 with a flat bottom 74, which is arranged at a gradient to the cylindrical wall 75 of the container 61. The bottom 74 is therefore not at right angles to the cylindrical wall. At the lowest point of the bottom 74, an outlet opening 76 is provided to which the line 57 can be connected. The level detection device 73 is located in the bottom 74 of the tank 61, preferably in the middle. An outlet opening 76 in the container 61 is provided for connecting with the line 57, so that the bottom 74 of the container 61 and a lower rim of the opening 76 are in line and merge in each other. A plane 78, which extends perpendicular to the cylindrical wall 75 of the container 61 at a lower end of the container 61, can be in line with an upper rim of the outlet opening 76 or preferably the plane 78 lies in the middle axis of the outlet opening 76. A basic volume 77 is given between the plane 78 and the inclined bottom 74 of the container 61.

For the calibration of the second measuring station 72, it is initially planned to record the basic volume 77 between a plane 78 and the inclined bottom 74, preferably by calculation or measurement. In addition, a fractional substance is then filled in so that its filling level is initially in plane 78, which forms a zero point for the pressure sensor. Subsequently, an intended or defined quantity of fractional substance can be entered into container 61, which is required for a production cycle (a batch). Based on the known density of the fractional substance as well as the base area of container 61 and the pressure above zero detected by the pressure sensor, the output volume available in container 61 can be calculated. This consists of the basic volume 77 and the volume above it, which is detected by the pressure sensor. As the density of the fractional substance is known, the quantity in kilograms can be calculated on the basis of the known size of container 61 and the known density of the fractional substance. A level height can also be calculated. Alternatively, the pressure can also be measured by the pressure sensor and, based on the known base area of vessel 61 and a measured height of the fractional substance, an indication in kilograms can be output. This information on the filling volume of the fraction in vessel 61 in kilograms can be compared with the measured variables output by the flow-measuring device 64, which is also preferably output in kilograms.

Since the flow meter measures the amount of fractional substance passed through, this determined amount must correspond to the difference between an initial volume in container 61 at the beginning of the dosing and the actual volume in container 61.

Due to the second measuring station 72, which differs in design and the recording of measured values for determining the quantity of fractional substances from the flow-measuring device 64 as the first measuring station, there may be a redundancy in the measurement on the one hand. On the other hand, due to the two different measuring plants or measuring devices, a more precise monitoring and improved control of the delivered quantity of fractional substances can be achieved.

## Claims

1. Inoculation station for a plant (10) for reducing an alcohol content in a beverage,
- with a container (61) in which at least one fractional substance is provided,
- with a line (57) leading away from the container (61), which opens into an outlet line (16), through which a reduced-alcohol beverage is supplied to a collecting container (21) or
removed from the plant (10),
- with a flow meter (68) which is arranged in the outlet line (16) and positioned upstream to the connection point (66) of the line (57) which opens into the outlet line (16),
- with a pump (63) arranged in the line (57), which feeds the fraction to the outlet line (16) in a metered manner,
- with a flow measuring device (64) arranged in the line (57) and downstream of the pump (63), by means of which the quantity of fractional substance fed to the outlet line (16) is detected,
**characterized in that**,
- the container (61) is designed as a second measuring station (72) and the container (61) comprises a filling level detection device (73) by means of which the quantity of at least one fractional substance withdrawn from the container (61) is detected.

2. Inoculation station according to claim 1, **characterized in that** a control means (80) detects and compares the amount of fractional substance detected by the level detecting means (73) and the amount of fractional substance detected by the flow measuring means (64).

3. Inoculation station according to claim 1 or 2, **characterized in that** the level detecting means (73) comprises a pressure sensor provided in the bottom (74) of the container (61).

4. Inoculation station according to claim 3, **characterized in that** the bottom (74) of the container (61) is designed as a flat bottom which is aligned at a gradient to the cylindrical wall (75) of the container (61) and has an outlet opening (76) at the lowest point.

5. Inoculation station according to one of the preceding claims, **characterized in that** the level detection device (73) is calibrated to a zero point lying in the plane (78) extending along a lower end of the cylindrical wall (75) of the container (61) which is oriented perpendicularly to the cylindrical wall (75).

6. Inoculation station according to claim 5, **characterised in that** the distance from the lowest part of the inclined bottom (74) to the plane (78) lies within the size of the outlet opening (76).

7. Inoculation station according to claim 5 or 6, **characterized in that** a basic volume (77) present between the bottom (74) and the plane (78) is detected by measuring the volume of the liquid or by calculation.

8. Inoculation station according to one of the preceding claims, **characterized in that**, starting from a detected pressure by the level detection device (73) and a density of the fractional substance, the volume at the at least one fractional substance above the plane (78) in the container (61) is determined.

9. Inoculation station according to claim 8, **characterized in that** a filling level in the container (61) is determined on the basis of the volume in the container (61) determined by the filling level detection submission (73), or **in that** the volume in the container (61) is determined on the basis of a measured height of the filling level.

10. Inoculation station according to one of the preceding claims, **characterized in that** the supply of the quantity of fractional substance into the outlet line (16) is controllable by the control means (80) in dependence on the quantity of reduced-alcohol beverage detected by the flow meter (68) in the outlet line (16).

11. Inoculation station according to one of the preceding claims, **characterized in that** the container (61) is closable with a lid (81) and a locking of the lid (81) is monitored by a sensor (82).

12. Method for monitoring a inoculation station (19) for a plant (10) for reducing an alcohol content in a beverage,
- in which a fractional substance is added to a reduced-alcohol beverage before it is discharged from the plant (10) or transferred to a collection container (21),
**characterized in that**,
- an inoculation station (19) according to one of claims 1 to 11 is used, by means of which a metered feed of the fraction substance is monitored by a second measuring station (72).
